# EUROPEAN PATENT SPECIFICATION

(11) **EP 0 526 422 B1**
(45) Date of publication and mention of the grant of the patent: **25.09.1996**
(21) Application number: 92830394.0
(22) Date of filing: 20.07.1992
(51) Int. Cl.: G03B 42/04

(54) **Automatic opening device for the window of a radiographic cassette**
Automatische Öffnungsvorrichtung des Aufbelichtungsfensters einer Röntgenfilmkassette
Dispositif d'ouverture automatique de la fenêtre de marquage d'une cassette radiographique

(30) Priority: 22.07.1991 IT RM910551
(43) Date of publication of application: 03.02.1993
(73) Proprietor: METALTRONICA s.r.l., I-00163 Rome (IT)
(72) Inventor: Blasi, Riccardo, c/o METALTRONICA s.r.l., I-00163 Rome (IT)
(74) Representative: Iannone, Carlo Luigi

(56) References cited:
- WO-A-82/01775
- FR-A- 2 464 503
- US-A- 3 614 917
- US-A- 5 333 170
- PATENT ABSTRACTS OF JAPAN vol. 12, no. 456 (P-793)30 November 1988 & JP-A-63 178 218

## Description

The present invention concerns a device for the automatic opening of the window of a radiographic cassette.

More particularly the invention concerns a device of the above mentioned type, in an equipment to print the patient's and the examination data on radiographic film, that permits to open the windows of the radiographic cassettes so as to allow to print the data relevant to the patient directly on the film by means of a device on the appliance.

At present, to be able to "customize" the plates to avoid all confusion, identifying them both according to the patient and according to the type of radiography carried out, completely manual systems are generally adopted made up either by putting some lead letters on the plates before making the radiography or by trying the data on the radiographic cassette.

These systems are not so practical, particularly in case of large structures where a considerable number of radiographies are carried out, as it is evident.

In fact, the solutions described, besides involving a considerable waste of time, do not garantee any absolute precision and do not exclude the possibility of confusing one radiography with another or with that of another patient or relevant to different parts of the body.

Moreover, the application of the lead letters could damage the seriograph of the remotely controlled table. The Applicant has recently realized an equipment to print the patient and the examination data on a radiographic film equipped with a computerized data input system, that permits to preset all data relevant to the radiography in advance, storing them in the computer and taking them out when required, that is when the radiography is being taken.

Of course, to be able to exploit this automation, it is necessary to have a device, that allows to print the stored data on the plate at the right moment.

Examples of these systems are disclosed in:
WO-A-82/01775, FR-A-2 464 503, US-A-3 614 917, Patent Abstract of Japan, vol.12, no 456, (P-793), 30 November 1988 & JP-A-63 178 218 (Noumra Kogger K.K.) 22 July 1988.

In view of all this, and with a view to the solutions developed in the field, the Applicant has realized a device, which can be used in any type of computerized equipment for printing data on a radiographic film, that acts on the window usually provided on radiographic cassettes, and makes it opened and closed automatically, to permit to print the necessary data on the film in times different from the execution of the radiography.

These and other results are obtained, according to the present invention, by realizing a device, equipped with a motor, that operates automatically whenever a radiographic cassette is inserted in the equipment, or manually after the insertion of the cassette and equipped with a cap element, axially mobile, for the engagement and disengagement with the window of the radiographic cassette and horizontally to open and close the same window.

Therefore it is a specific object of the present invention a device for the automatic opening of the window of a radiographic cassette, comprising:
- a fixed bracket;
- an equipment adapted for sliding movement along said bracket from a position of disengagement with said window to a first engagement position at which the equipment engages with said window, and to a second engagement position at which the window is fully opened; and
- a motor means operatively connected to said equipment for effecting said sliding movement;
   wherein said equipment includes:
- a cap element;
- a displacement means causing a sliding movement of said cap element perpendicular with respect to the bracket, between a position at which said cap element engages said window and a position at which it is disengaged therefrom;
- elastic means counteracting the displacement of said cap element, said elastic mans being compressed in said position of disengagement of said cap element;
- a slide connected to said motor means and carrying said displacing means, for sliding movement on said fixed bracket;
characterised in that
said displacement means comprises a wedge mounted on said slide; and in that said cap is provided with a pair of rollers for movement along said wedge;
the arrangement being such that
- when the equipment is moved along the bracket from its disengagement position to its first engagement position, thereby moving the wedge along the bracket and thus enabling the cap to be displaced by said elastic means towards to its position of engagement with the cassette window, then further movement of the equipment along said bracket causes the cap to move with the slide, thereby opening the cassette window; and
- when the equipment is moved along the bracket from its first engagement position to its disengagement position, a pressing means on the bracket presses the pair of rollers against the wedge and the elastic means thereby causing the pair of rollers to move up on the wedge so as to displace the cap from its engagement position to its disengagement position.

The device according to the invention will preferably be equipped with top and bottom limit switches and with a diaphragm element, carried by said mobile equipment, that reverses the motion or disconnects the device by darkening the light on the limit switches.

According to the invention, the motion from the motorized means to the mobile equipment is transmitted by a lead nut connected by means of a bracket to the mobile equipment, sliding on an endless screw, that is driven by the motorized means through a pair of gears.

The present invention will now be described according to its preferred embodiments with particular reference to the figures of the enclosed drawings wherein:
Figure 1 is a first front view of a device according to the invention;
Figure 2 is a section view taken along line II-II of figure 1;
Figure 3 is a second front view of a device according to the invention;
Figure 4 is a section view taken along line IV-IV of figure 3;
Figure 5 is a third front view of a device according to the invention; and
Figure 6 is a section view taken along line VI-VI of figure 5;

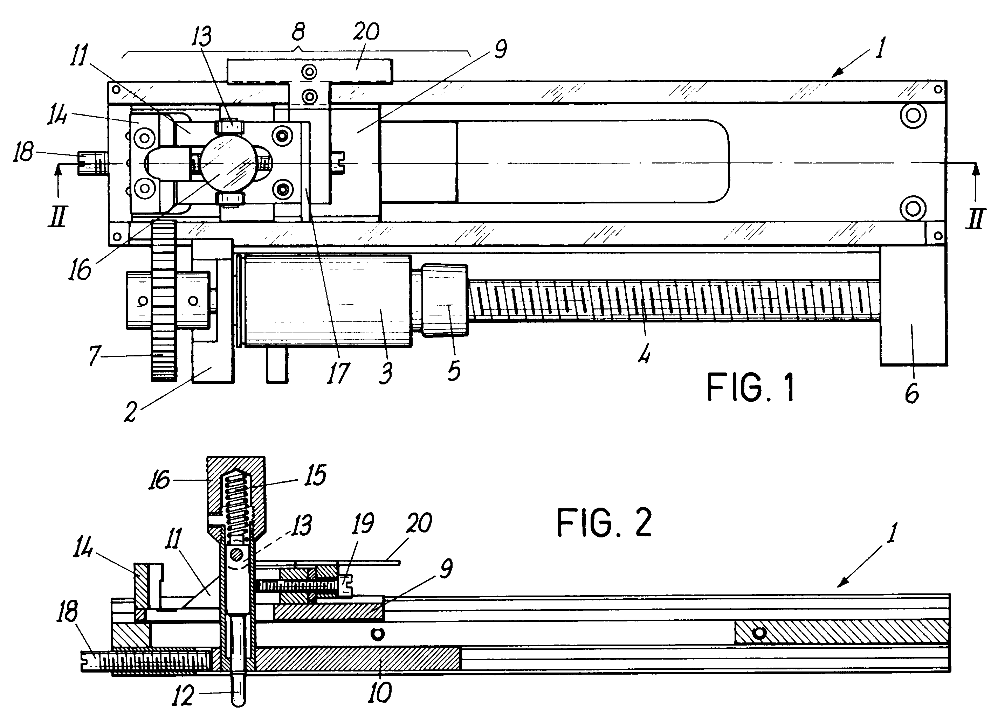

Referring to the enclosed drawings, figures 1 and 2 show the starting position of a device according to an embodiment of the invention.

This device includes a bracket 1 supporting the mobile equipment, that will be described hereafter, a support 2 of motor 3, an endless screw 4 on which a lead nut element 5 slides and transmits the motion to the mobile equipment and a support 6 of such endless screw 4.

The transmission of the motion from motor 3 to endless screw 4 is obtained by the toothed gear pair 7.

This mobile equipment, generally indicated by reference number 8, includes a top slide 9, sliding on a bottom slide 10, in turn sliding on said supporting bracket 1. The top slide 9 is equipped with a wedge 11 that lifts a cap 12 by means of a pair of rollers 13.

The top slide 9 is equipped in front of wedge 11, with a front ledge 14, while cap 12 is equipped with a counteracting spring 15, inside cilinder 16, that makes it free, and by displacing it downards when wedge 11 is being displaced.

The motion of the lead nut 5 to the mobile equipment 8 is transmitted through bracket 17.

On the supporting bracket 1 a screw 18 is provided, where the mobile equipment 8 strikes, that acts on slide 10, while the mobile equipment 8 strikes on a ledge 19 for the top dead center of cap 12.

Furthermore a diaphragm 20 is mounted, that, by dimming a photoelectric cell, not shown, will reverse the motion of motor 3 and will switch the device at the end of the cycle.

As already said, the device according to an embodiment of the invention can be used in any equipment for the execution of radiographies equipped with the system to print on the film through a lens.

The device according to an embodiment of the invention works as follows:

When the cassette is being inserted in the slot of the equipment of the above mentioned type, a microprocessor, part of the equipment, too, controls motor 3 of the device subject of the invention.

Motor 3 receives an impulse to start. The cassette window is usually equipped, according to standard production methods, with a notch that, when the cassette is being inserted, reaches a position in front of cap 12 which is lifted, as shown in figure 2, with spring 15 compressed, by the lifting wedge 11.

When motor 3 starts, turning the endless screw 4, the lead nut element 5 moves on along the endless screw 4 setting also the top slide 9 in motion.

Further to the displacement of slide 9, wedge 11 slides under the rollers 13, thus permitting to cap 12 to protrude towards the notch in the cassette window, pushed by spring 15 that can be decompressed.

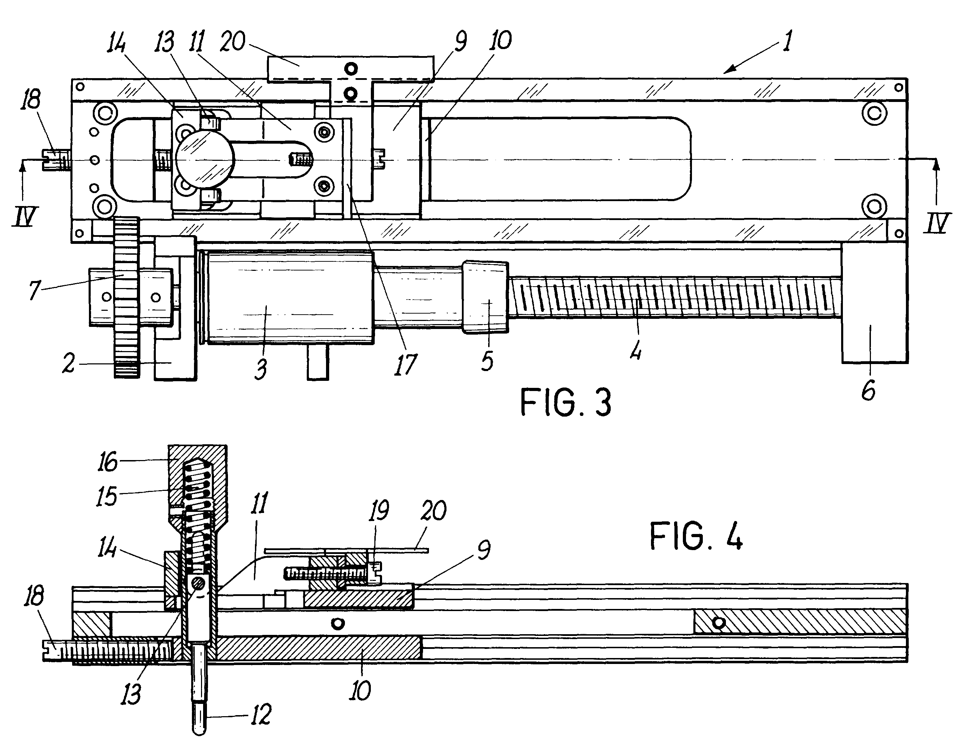

The position shown in figure 3 and 4 is reached, and here the top slide 9 only has moved along bracket 1, as cap 12 is still in the same position with respect to bracket 1, engaged in the slot of the radiographic cassette window.

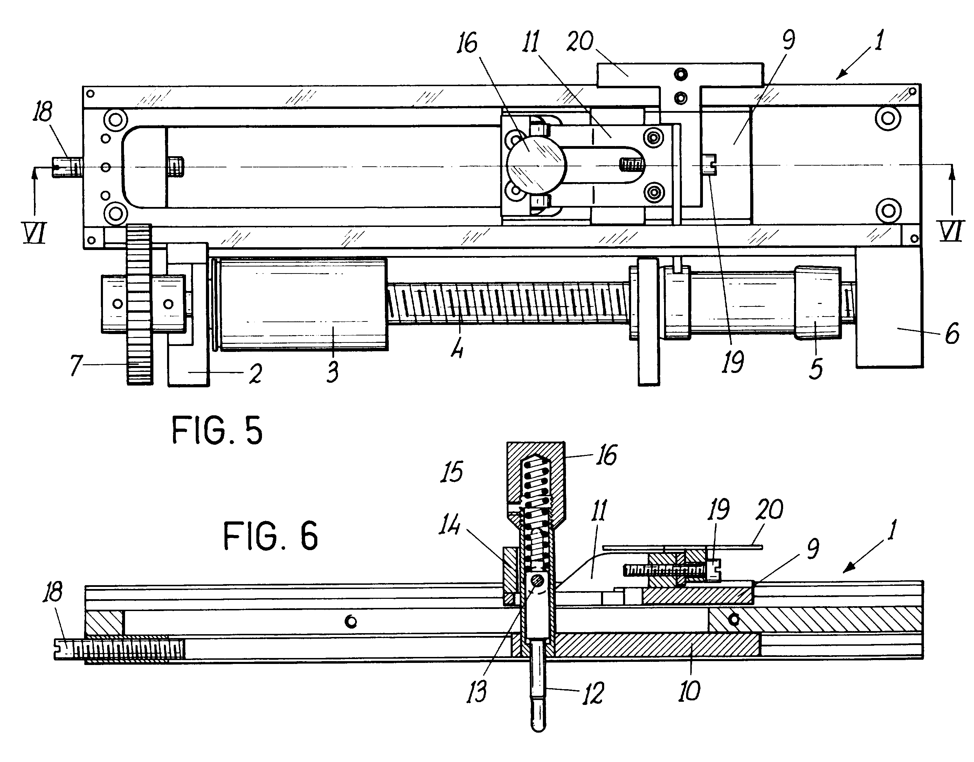

When the lead nut 5 continues to move on, ledge 14 of slide 9 engages itself with cylinder 16 of cap 12 trailing the latter together with the bottom slide 10 to the position shown in figure 5 and 6 which is the top dead center of the stroke of the device according to an embodiment of the invention.

Motor 3 reverses its rotation thanks to the impulse sent by diaphragm 20 that, by dimming a photoelectric cell, sends a signal to the microprocessor, and therefore the whole mobile equipment returns to end of stroke disconnecting cap 12 from the notch in the cassette window. The second photoelectric cell is dimmed by diaphragm 20 and switches the device off.

As already said, the cassette can be developed later, calmly, with no risk of confusion, because the name of the patient has been printed on the film.

The present invention has been described with a specific reference to some of its preferred embodiments but it should be intended that any variations and/or modifications can be carried out by those skilled in the art without going beyond the scope of the invention.

## Claims

1. Device for opening and closing the cover window of a radiographic cassette, comprising:
- a fixed bracket (1);
- an equipment (8) adapted for sliding movement along said bracket (1) from a position of disengagement with said window to a first engagement position at which the equipment engages with said window, and to a second engagement position at which the window is fully opened; and
- a motor means (3) operatively connected to said equipment (8) for effecting said sliding movement; wherein said equipment (8) includes:
- a cap element (12);
- a displacement means (11) causing a sliding movement of said cap element (12) perpendicular with respect to the bracket (1), between a position at which said cap element (12) engages said window and a position at which it is disengaged therefrom;
- elastic means (15) counteracting the displacement of said cap element, said elastic mans (15) being compressed in said position of disengagement of said cap element (12);
- a slide (9) connected to said motor means (3) and carrying said displacing means (11), for sliding movement on said fixed bracket (1);
characterised in that
said displacement means (11) comprises a wedge (11) mounted on said slide (9); and in that said cap (12) is provided with a pair of rollers (13) for movement along said wedge (11);
the arrangement being such that
- when the equipment (8) is moved along the bracket (1) from its disengagement position to its first engagement position, thereby moving the wedge (11) along the bracket (1) and thus enabling the cap (12) to be displaced by said elastic means (15) towards to its position of engagement with the cassette window, then further movement of the equipment (8) along said bracket (1) causes the cap (12) to move with the slide (9), thereby opening the cassette window; and
- when the equipment (8) is moved along the bracket (1) from its first engagement position to its disengagement position, a pressing means (18) on the bracket (1) presses the pair of rollers (13) against the wedge (11) and the elastic means (15) thereby causing the pair of rollers to move up on the wedge (11) so as to displace the cap (12) from its engagement position to its disengagement position.

2. Device according to claim 1 characterized in that it is provided with a top and bottom limit switches and a diaphragm element (20) that reverses the motion or disconnects the device by dimming said limit switches.

3. Device according to one of the above said claims characterized in that the motion from said motorized means (3) to the mobile equipment (8) is transmitted by means of a lead nut (5) connected through a bracket to said mobile equipment (8) and sliding along an endless screw (4), said endless screw (4) receiving the motion from the motorized means (3) through a pair of gears (7).

## Patentansprüche

1. Vorrichtung zum automatischen Öffnen und Schliessen des Deckfensters einer Röntgenkassette, enthaltend:
- einen ortsfesten Bügel (1); );
- eine Anordnung (8), die von einer Auskupplungsstellung mit dem genannten Fenster zu einer ersten Kupplungstellung, in der die Anordnung sich mit dem Fenstes verbindet, und zu einer zweiten Kupplungsstellung, in der das Fenster voll offen ist, längst des vorgenannten Bügels gleitbar ist, und
- ein Antriebsmittel (3), das zur Durchführung der genannten Gleitbewegung mit der vorgenannten Anordnung (8) wirksam verbuden ist, wobei diese Anordnung (8):
- ein Stiftglied (12);
- ein Verstellmittel (11) zum Gleiten des genannten Stiftgliedes senkrecht zum Bügel (1) zwischen einer Stellung, in der das genannte Stiftglied (12) sich mit dem Fenster kuppelt und einer Stellung, in der es vom Fenster ausgekuppelt ist;
- elastisches Mittel (15), des gegen die Verstellung des genannten Stiftmittels wirkt und in der Auskupplungsstellng des Stiftgliedes (12) zusammengepresst ist;
- einen Schlitten (9),der mit dem Antriebsmittel (3) verbunden ist und das Verstellmittel (11) zur Gleitbewegung des ortsfesten Bügels (1) trägt, enthält;
dadurch gekennzeichnet, dass das Verstellmittel (11) einen auf dem Schlitten (9) gelagerten Keil (11) aufweist, und dass der Stift (12) mit zwei längs des Keiles (11) bewegbaren Rollen (13) versehen ist, wobei die Anordnung so getroffen ist, dass wenn die Anordnung (8) längs des Bügels (1) von ihrer Auskupplungsstellung zu ihrer ersten Kupplungsstellung verstellt wird, dann wird der Keil (11) längs des Bügels verstellt und dadurch der Stift (12) durch die elastichen Mittel (15) zu seiner Kupplungsstellung mit dem Kassettefenster bewegt und eine weitere Verstellung der Anordnung (8) längs des Bügels (1) eine Verstellung des Stiftes (12) mit dem Schlitten (9) verursacht; und wenn die Anordnung (8) von seiner ersten Kupplungsstellung zu seiner Auskupplungsstellung längs des Bügels (1) bewegt wird, dann drückt ein auf dem Bügel (1) vorgesehenes Druckmittel (18) gegen die zwei Rollen (15), wodurch diese Rollen auf dem Keil (11) auflaufen und so den Stift (12) aus seiner Kupplungsstellung zu seiner Auskupplungsstellung verstellen.

2. Vorrichtung nach Anspruch 1, dadurch gekennzeichnet, dass sie mit einem oberen und unteren Begrenzungsschalter und mit einen Membranglied (20), des die Bewegung umkehrt und die Vorrichtung durch Dämpfung der genannten Begrenzungsschalter ausschaltet.

3. Vorrichtung nach einem der vorhergehenden Ansprüche, dadurch gekennzeichnet, dass die Bewegung vom Antriebsmittel (3) zur verstellbaren Anordnung (8) durch eine vermittels eines Bügels mit der Anordnung (8) verbundene Führungsmutter (5) übertragen wird, die auf einer Gewindeschraube (4) gleitbar ist, wobei die Gewindeschraube (4) vom Antriebsmittel (3) durch ein Paar von Zahnräder (7) betätigt wird.

## Revendications

1. Dispositif pour ouvrir et fermer la fenêtre de marquage d'une cassette radiographique, comprenant:
- un châssis fixe (1);
- un équipement (8) susceptible d'exécuter un movement de glissement le long dudit châssis (1) d'une position de désengagement de ladite fenêtre à une premier position d'engagement, dans laquelle l'équipement s'engage avec ladite fenêtre et à une deuxième position d'engagement, dans laquelle ladite fenêtre et complétement ouverte; et
- un moyen à moteur (3) relié activement audit équipement (8) pour exécuter ledit mouvement de glissement dans lequel ledit équipement comprende:
- un élément à pivot (12);
- un moyen de déplacement (11) qui exécute un mouvement de glissement dudit élément à pivot (12) perpendiculairement au châssis (1), entre une position, dans laquele l'élément à pivot (12) s'engage avec ladite fenêtre et une position, dans laquele il est désengagé de la même;
- moyens élastiques (15) agissant contre le déplacement de l'élément à pivot, lesdits moyens élastiques (15) étant comprimés dans ladite position de désengagement de l'élément à pivot (12);
- un curseur (9) relié audit moyen à moteur (3) et portant ledit moyen de déplacement (11) pour le mouvement de glissement sur ledit châssis fixe (1);
caracterisé en ce que
ledit moyen de déplacement (11) comprende un coin (11) monté sur ledit curseur (9) et en ce que ledit pivot (12) est muni d'un couple des galets (13) pour le mouvement de long dedit coin (11);
la disposition étant telle que:
- quand l'équipement (8) est déplacé le long du châssis (1) de sa position de désengagement à sa premiere position d'engagement et déplace ainsi le coin (11) le long du châssis (11) et permet audit pivot (12) d'être déplacé par ledit moyen élastique vers sa position d'engagement avec ladite fenêtre de la cassette et après un ultérieur mouvement de l'équipement (8) le long du châssis (1) déplace le pivot (12) ensemble avec le curseur (9) pour ouvrir ainsi la fenêtre de la cassette et
- quand l'équipement (8) est déplacé le long du châssis (1) de sa premiere position d'engagement à sa position de désangagement, au moyen de pression sur le châssis (1) presse la couple des galets (13) contre le coin (11) et le moyen élastique (15) déplace la couple des galets sur le coin (11) pour déplacer le pivot (12) de sa position d'engagement à sa position de désengagement .

2. Dispositif selon la revendication 1, caracterisé en ce qu'il est muni des interrupteur de limitation supèrieur et intèrieur et d'un élément à diaphragme (20), qui renverse le mouvement ou désengage le dispositif par étanchement desdits interrupteur de limitation.

3. Dispositif selon une quelconque des revendications précédentes, caractérisé en ce que le mouvement est transmis dedit moyen à moteur (3) à l'équipement mobile (8) par un écrou de guide (5) relié par un châssis audit équipement mobile (8) et glissant le long d'un vis sans fin (4), ledit vis sans fin (4) étant activé dudit moyen à moteur (3) à travers un couple des engranage (7).
